Europäisches Patentamt

European Patent Office

Office européen des brevets

(11) Veröffentlichungsnummer: **0 314 963**
**A2**

(12) # EUROPÄISCHE PATENTANMELDUNG

(21) Anmeldenummer: **88117154.0**

(22) Anmeldetag: **14.10.88**

(51) Int. Cl.⁴: **B01D 35/30**

(30) Priorität: **06.11.87 DE 8714819 U**

(43) Veröffentlichungstag der Anmeldung:
**10.05.89 Patentblatt 89/19**

(84) Benannte Vertragsstaaten:
**AT BE CH DE ES FR GB GR IT LI LU NL SE**

(71) Anmelder: **Pall Deutschland GmbH**
**Philipp-Reis-Strasse 6**
**D-6072 Dreieich 1(DE)**

(72) Erfinder: **Hensgen, Heinz-Ulrich**
**Ringstr. 74**
**D-6464 Linsengericht 2(DE)**
Erfinder: **Otto, Ulrich**
**Lessingstr. 67**
**D-6052 Mühlheim(DE)**

(74) Vertreter: **Geissler, Bernhard, Dr. jur.,**
**Dipl.-Phys. Patent- und Rechtsanwälte et al**
**Bardehle-Pagenberg-Dost-**
**Altenburg-Frohwitter-Geissler & Partner**
**Postfach 86 06 20**
**D-8000 München 86(DE)**

(54) **Kunststoffgehäuse.**

(57) Kunststoffgehäuse, welches aufweist:

a) einen Gehäusekopf (1) mit einer Innenseite aus Kunststoff, der einen Einlaßteil (3), einen Auslaßteil (2) und einen Verbindungsteil (4) aufweist, die jeweils ein äußeres Befestigungselement (7, 8, 9) und einen davon getrennten Dichtbereich (10, 11, 12) aufweisen,

b) ein einseitig offenes Gehäuseteil (5) mit einer Innenseite aus Kunststoff, dessen offenes Ende ein Befestigungstück (13) und ein Dichtelement (14) aufweist,

c) ein lösbares Verbindungselement (6), das in lösbarem Eingriff mit dem Befestigungselement (9) des Verbindungsteils (4) und dem Befestigungsstück (13) des Gehauseteils (5) steht, wobei das Gehäuseteil (5) am Gehäusekopf (1) so befestigbar ist, daß das Dichtelement (14) dem Dichtbereich (12) des Verbindungsteils (4) anliegt.

EP 0 314 963 A2

## Kunststoffgehäuse

Die vorliegende Erfindung bezieht sich auf ein Kunststoffgehäuse, und insbesondere auf ein Kunststoffgehäuse zum Leiten und Filtern von Elektronik-Chemikalien, zum Filtern bei der Wasseraufbereitung und Galvanik.

Es sind Kunststoffgehäuse bekannt, in denen Gehäusebereiche bestehen, die mit dem Produktfluß in Kontakt stehen, aber nicht von ihm durchströmt werden. Diese Gehäusebereiche sind beispielsweise produktberührende Gewinde, Dichtungsspalte, spitzwinklig zulaufende Innenraumecken und dergleichen. Es entsteht ein undefinierter Totraum, der verunreinigende Teilchen aufnehmen und abgeben kann.

Es sind ebenfalls konische oder parallele Innengewinde bekannt, die mit eingelegten Dichtstoffen (Bänder oder Pasten) versehen sind, innerhalb derer Gewindestutzen oder Gewinderohre eingeschraubt sind. Es ist die Abdichtung ungenügend und unrein.

Weiterhin sind aufeinander abgestimmte Gewinde bekannt, die einen Dichtring halten. Beim Zusammenschrauben der Teile wird auf diesen Dichtring eine Scherkraft ausgeübt, die ihn beschädigen kann.

Die Aufgabe der vorliegenden Neuerung besteht darin, ein Kunststoffgehäuse zu schaffen, das sicher abdichtet und die oben genannten Nachteile vermeidet.

Diese Aufgabe wird durch ein Kunststoffgehäuse gelöst, wie es im Anspruch 1 definiert ist. Bevorzugte Ausführungsformen ergeben sich aus den Unteransprüchen.

Die vorliegende Erfindung besteht somit in einem Kunststoffgehäuse, das eine Innenraumbegrenzung aus Kunststoff aufweist. Das Kunststoffgehäuse besteht aus einem Gehäusekopf und einem Gehäuseteil, das mittels eines Verbindungselementes lösbar am Gehäusekopf befestigbar ist. Der Gehäusekopf weist einen Einlaßteil und einen Auslaßteil auf, an denen eine geeignete Zuleitung bzw. Ableitung angeschlossen werden kann. Der Dichtbereich des Einlaßteils und des Auslaßteils mit einer solchen Leitung liegt innerhalb des Bereiches, der durch das umlaufende Befestigungselement definiert ist. Somit kann der Produktfluß mit dem Befestigungselement (z.B. einem Gewindestutzen) nicht in Kontakt kommen, und ein Totraum ist wirksam vermieden. Außerdem kann das Gehäuse schneller freigespült werden als Gehäuse im Stand der Technik. Die Verbindung von Gehäusekopf und Gehäuseteil ist vorzugsweise so gestaltet, daß die umlaufende Dichtfläche in einen radial außerhalb gelegenen Bereich übergeht, der mit dem Befestigungselement in Verbindung steht. Das erfindungsgemäße Kunststoffgehäuse ist somit vorzugsweise frei von Toträumen, d.h. von Innenraumbereichen, die nicht durch die Schaffung der Flußbereiche für den Fluidfluß entstanden sind bzw. diesem Fluß dienen.

Die Dichtbereiche sind bei der Konstruktion des Kunststoffgehäuses auf ein Minimum beschränkt. Dies ermöglicht eine verbesserte Qualitätsüberprüfung der zu kontrollierenden Bereiche bzw. Flächen. Damit ist gleichzeitig ein optimierter Dichtbereich erreicht, der konstruktiv so angeordnet ist, daß die kritische Fläche in sich selbst geschützt ist (Zurücknehmen der Dichtungsebene von der Betriebsebene). Insbesondere ist auf der Reinseite des Kunststoffgehäuses, d.h. am Auslaßteil des Gehäusekopfes, kein Totraum vorhanden. Dadurch ist insbesondere bei der Leitung von hochaggressiven Medien eine gefahrlose Ableitung möglich.

Der Einlaßteil und Auslaßteil des Gehäusekopfes ist bevorzugt kreiszylindrisch, und als Befestigungselemente dieser beiden Teile dienen Gewindestutzen, die entlang des Umfangs von Einlaßteil und Auslaßteil vorgesehen sind. Die Dichtfläche zwischen Einlaßteil bzw. Auslaßteil und einer möglichen Anschlußleitung besteht in Form einer ringförmigen Nut oder eines Rezesses, der einen elastischen Dichtring, z.B. einen O-Ring, aufnimmt. Ein solches Dichtelement kann Winkelfehler der Anschlußleitung (Rohrleitung) und beim Einschrauben auftretende radiale Kräfte kompensieren. Zur Befestigung sind Außen-Überwurfmuttern vorgesehen, die die mögliche Anschlußleitung mit dem Gewindestutzen des Einlaßteils bzw. Auslaßteils verbinden. Dabei wird der Dichtring in der Nut komprimiert und dichtet den Anschlußspalt sicher ab.

Die Verwendung einer Überwurfmutter stellt sicher, daß auf den Dichtring keine Scherkräfte wirken, die ihn zerstören könnten. Der Dichtring wird nur in axialer Richtung vorgespannt. Insbesondere definiert die ringförmige Nut in den Stirnflächen von Einlaßteil, Auslaßteil und Verbindungsteil eine geeignete maximale Pressung des eingelegten Dichtelementes, wenn Anschlußleitungen zur Anlage an Einlaßteil bzw. Auslaßteil des Gehäusekopfes kommen, bzw. wenn das Gehäuseteil mit seinem ringförmigen Befestigungsstück dem Verbindungsteil des Gehäusekopfes anliegt. Dadurch ist gewährleistet, daß bei der Pressung des Dichtelementes immer der gleiche Dichtdruck herrscht.

Bevorzugt ist auch der Verbindungsteil des Gehäusekopfes mit einem äußeren Gewindestutzen versehen, und hat eine kreiszylindrische Form. Das Gehäuseteil hat einen ringförmigen Vorsprung, Ringflansch oder Wulst, den eine Überwurfmutter zur Befestigung mit dem Gewindestutzen des Verbindungsteils hintergreifen kann. Diese Schraubmontage gewährleistet eine sichere Abdichtung und übt auf den Dichtring ausschließlich laterale Kompressionskräfte aus, wobei Gehäusekopf und Gehäuseteil bei der Montage nicht gegeneinander verdreht werden. Dies erhöht die Betriebssicherheit. Die Aufnahme des elastischen Dichtelementes in dem ringförmigen Vorsprung des Gehäuseteils ist positionsgerecht und kann unverlierbar sein, d.h. das Kunststoffgehäuse kann das Dichtelement weder in stehender noch in hängender Stellung verlieren. Auch bei der Abnahme des Gehäuseteils ist das Dichtelement unverlierbar angeordnet bzw. durch eine Nut mit einem von der Nutöffnung leicht rückspreizenden Nutraum, in den sich der durch die Nutöffnung gedrückte O-Ring ausdehnt.

Die Überwurfmutter hat bevorzugt ein konisches Gewinde und ist daher sehr leichtgängig. Beim Aufdrehen über den Gewindestutzen trägt das Gewinde erst nach der letzten Umdrehung und ermöglicht so ein leichtes Lösen der Mutter.

Bevorzugt ist die in den Stirnseiten von Einlaßteil und Auslaßteil befindliche ringförmige Nut von dem Innenraum des Gehäusekopfes durch einen schmalen Steg getrennt, Dadurch ist der Dichtungsspalt auf eine minimale Länge/Breite reduziert.

Der Gehäusekopf weist im Bereich seines Einlaßteils und seines Auslaßteils bevorzugt Öffnungen auf, die zur Entlüftung und Entleerung des Gehäusekopfes dienen. Ebenso ist im Gehäuseteil an seiner tiefstgelegenen Stelle eine Öffnung vorgesehen, die zur Entleerung des Gehäuses dient und jegliche Art von Sumpfbildung nach der Filtration wirksam verhindert.

Das Gehäuseteil (5) hat bevorzugt die Form einer Glocke, in die ein Filter für Elektronik-Chemikalien einsetzbar ist. Sie kann als einfaches Spritzgußteil ausgeführt sein und weist möglichst keine Eigenspannung auf. Es ist weiterhin bevorzugt, daß die Überwurfmutter aus einem glasfaserverstärkten Material oder Hochfestwerkstoff besteht, das viel fester ist als der Gehäusekopf oder das Gehäuseteil. Somit stützt sie die plastischen Teile, nämlich den Gehäusekopf und das Gehäuseteil. Die Überwurfmutter dient neben der Aufnahme von Schließkräften auch für die Aufnahme von Umfangskräften, die bei der Zusammensetzung der beiden Teile auftreten. Die Überwurfmutter ist nicht produktberührend. Der Aufbau des Kunststoffgehäuses hat einen verminderten Werkstoffverbrauch. Nur diejenigen Zonen des Gehäusebereichs sind mit dickeren Werkstofflagen versehen, an denen mechanische Spannungen übertragen werden müssen. In den nicht spannungsführenden Bereichen ist eine optimale Werkstoffausnutzung erreicht.

Vorzugsweise besteht der Gehäusekopf, das Gehäuseteil und das Verbindungselement ganz aus Kunststoff.

Als Werkstoffe für das Kunststoffgehäuse sind Polypropylen, glasfaserverstärktes Polypropylen, PVDF, TFA (Hoechst) oder PFA (Du Pont) vorgesehen. Diese Werkstoffe haben unterschiedliche Schrumpfungsfaktoren. Da die Abmessung der Gehäuseteil-Einsätze auch für unterschiedliches Material eine enge Toleranz hat und da eine gleichmäßige Gehäuseteil-Ausfüllung in Gehäusen mit unterschiedlichen Werkstoffen notwendig ist, wird zur Herstellung des Kunststoffgehäuses ein Werkzeugeinsatz gewählt, der auch bei unterschiedlichen Schrumpfungsprozessen immer den gleichen definierten Sitz ermöglicht.

Es sind verschiedene Gehäuseteile zur Befestigung am Gehäusekopf vorgesehen.

Weitere Vorteile. Merkmale und Anwendungsmöglichkeiten der vorliegenden Erfindung ergeben sich aus der nachfolgenden Beschreibung eines Ausführungsbeispiels in Verbindung mit der Zeichnung.

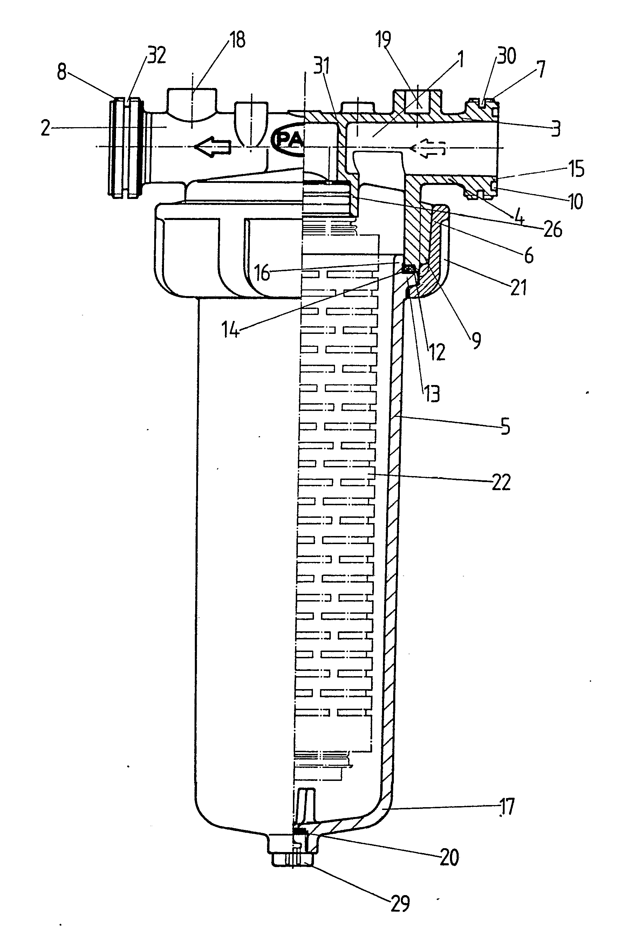

Fig. 1 zeigt eine Seitenansicht des erfindungsgemäßen Kunststoffgehäuses, teilweise im Aufriß.

Das Kunststoffgehäuse besteht aus einem Gehäusekopf 1, einem Gehäuseteil 5 und einem lösbaren Verbindungselement 6. Der Gehäusekopf I weist einen Auslaßteil 2 auf, der die Reinseite des Kunststoffgehäuses darstellt. An diesen Auslaßteil 2 kann eine Anschlußleitung, z.B. ein Kunststoffrohr, zur Abführung eines Fluides angeschlossen werden. Der Anschluß erfolgt mittels eines aufgebrachten oder eingeschnittenen Gewindestutzens 7, der am Umfang des Auslaßteils 2 vorgesehen ist. Zur Befestigung werden geeignete Überwurfmuttern verwendet, die einen an der Anschlußleitung befindlichen Flansch gegen das Auslaßteil drücken. Dabei ist an der Stirnseite des Auslaßteils eine ringförmige Nut 10 vorgesehen, die zur Aufnahme eines ebenfalls ringförmigen Dichtelementes bestimmt ist. Wenn die Anschlußleitung zur Anlage mit dem Auslaßteil kommt, dichtet das Dichtelement den entstehenden Verbindungsspalt gegen austretendes Fluid ab. Im Bereich des Gewindestutzens ist eine umlaufende Nut 30 eingeschnitten, die zum Verplomben des Anschlusses dient und die Verschraubung sichert, z.B. nachdem vorbenetzte oder getestete Elemente eingebaut sind. Die umlaufende Nut 10 ist von dem Innenraum des Auslaßteils 2 durch einen schmalen Steg 15 getrennt. Ebenfalls ist im Bereich des Auslaßteils eine Öffnung 19 vorgesehen, die zur Entleerung oder Entlüftung des Auslaßteils dient. Die Öffnung 19 kann durch ein Verschlußelement in einer Gewindebohrung abgedichtet werden. Einen analogen Aufbau zeigt der Einlaßteil 3 des Gehäusekopfes 1.

Zur Befestigung einer möglichen Anschlußleitung, z.B. eines Kunststoffrohres, ist ein Gewindestutzen 8 vorgesehen, und es besteht eine ringförmige Nut (nicht gezeigt) entsprechend der Nut 10. Eine Öffnung 18 ist entsprechend der Öffnung 19 gebildet. Eine Nut 32 ist entsprechend der Nut 30 gebildet. Auch die Öffnung 18 kann durch ein Verschlußelement in einer Gewindebohrung verschlossen werden. Einlaßteil und Auslaßteil sind durch einen Steg 31 getrennt, so daß ein strömendes Fluid nur über einen mit dem Gehäusekopf lösbar verbundenen Gehäuseteil 5 zum Auslaßteil gelangen kann. Der Gehäusekopf 1 weist einen seitlich angeordneten Verbindungsteil 4 auf, der zur Verbindung mit dem auswechselbaren Gehäuseteil 5 dient. Im Kunststoffgehäuse ist eine Halterung 26 für den Kopf eines Filtereinsatzes 22 gebildet. Die Halterung 26 ist vorzugsweise mit dem Gehäusekopf verbunden, und zwar über den Steg 31, der eine einstückige Verbindung mit der Halterung 26 aufweist. Die Halterung definiert eine Verbindung des Einlaßteils 3 mit dem Inneren des Gehäuseteils 5 und eine Verbindung des Auslaßteils 2 mit dem äußeren Bereich des Gehäuseteils 5. An der Stirnseite des Verbindungsteils ist eine Nut 12 vorgesehen, die zur Aufnahme eines Dichtelementes 14 bestimmt ist. Am Umfang des Verbindungsteils ist ein Gewindestutzen 9 aufgesetzt oder eingeschnitten, der ein aufnehmendes Gewinde für die lösbare Überwurfmutter 6 zur Verfügung stellt. Das Gehäuseteil 5 hat die Form einer längsgestreckten Glocke, in die der am Gehäusekopf mittels Halterung 26 befestigte Filtereinsatz 22 hineinragt. Der Filtereinsatz ist als einseitig verschlossener Zylinder ausgestaltet. Das Gehäuseteil 5 weist einen ringförmigen Vorsprung oder Ringflansch 13 auf, hinter den die Überwurfmutter 6 greift, um das Gehäuseteil 5 am Gehäusekopf 1 zu befestigen. Die Überwurfmutter 6 weist geeignete Stege oder Rippen 21 auf, die von einem Kunststoffringschlüssel erfaßt werden, um die Überwurfmutter 6 aufzuschrauben bzw. abzuschrauben. Die Befestigung des Gehäuseteils 5 in Form des ringförmigen Vorsprungs 13 ist geeignet am einen Ende 16 des Gehäuseteils angeordnet. Dabei kann der ringförmige Vorsprung 13 von der Stirnfläche des Endes 16, wie gezeigt, beabstandet sein. Das Gehäuseteil 5 weist ein unteres Ende 17 auf, dessen Stirnfläche konvex gekrümmt ist oder kegelförmig verläuft. Zur Entleerung oder Reinigung des Gehäuseteils 5 ist am unteren Ende 17 eine Öffnung 20 gebildet, die mittels eines Verschlusses 29 abgedichtet wird. Vorzugsweise ist ein Wandhalter, z.B. ein Winkeleisen vorgesehen, um das Kunststoffgehäuse an einer Wand zu befestigen. Dabei werden für Kunststoffe geeignete Schrauben zur Befestigung des Wandhalters eingesetzt. Diese Schrauben sind scharfkantig und haben selbstschneidende Eigenschaften und gewährleisten insbesondere an der Kontaktfläche eine Verbindung, die gegen Temperatureinfluß, insbesondere gegen Ausdehnung oder Schrumpfung, gesichert ist.

## Ansprüche

1. Kunstoffgehäuse

   a) mit einem Gehäusekopf (1) mit einer Innenseite aus Kunststoff, der einen Einlaßteil (3), einen Auslaßteil (2) und einen Verbindungsteil (4) aufweist, die jeweils ein äußeres Befestigungselement (7,8,9) und einen davon getrennten Dichtbereich (10,11,12) aufweisen,

   b) mit einem einseitig offenen Gehäuseteil (5) mit einer Innenseite aus Kunststoff, dessen offenes Ende ein Befestigungsstück (13) und ein Dichtelement (14) aufweist,

   c) mit einem lösbaren Verbindungselement (6), das im lösbaren Eingriff mit dem Befestigungselement (9) des Verbindungsteils (4) und dem Befestigungsstück (13) des Gehäuseteils (5) steht, wobei das Gehäuseteil (5) am Gehäusekopf (1) so befestigbar ist, daß das Dichtelement (14) dem Dichtbereich (12) des Verbindungsteils (4) anliegt.

2. Kunststoffgehäuse nach Anspruch 1, dadurch gekennzeichnet, daß der Einlaßteil (3), der Auslaßteil (2) und der Verbindungsteil (4) jeweils eine kreiszylindrische Form haben, wobei ihre Befestigungselemente (7, 8, 9) jeweils durch Gewindestutzen gebildet werden.

3. Kunststoffgehäuse nach Anspruch 1 oder 2, dadurch gekennzeichnet, daß in der Stirnseite des Verbindungsteils (4) ein ringförmiger Absatz (12) gebildet ist, der zur Aufnahme des Dichtelementes (14) dient und den Dichtbereich des Verbindungsteils (4) definiert.

4. Kunststoffgehäuse nach einem der vorhergehenden Ansprüche, dadurch gekennzeichnet, daß das Gehäuseteil (5) kreiszylindrische Form hat, wobei das Befestigungsstück als Ringflansch (13) ausgebildet ist, der an dem Dichtelement (14) anliegt.

5. Kunststoffgehäuse nach Anspruch 4, dadurch gekennzeichnet, daß das lösbare Verbindungselement eine Überwurfmutter (6) ist, die den Ringflansch (13) hintergreift und mit dem Gewindestutzen (9) des Verbindungsteils (4) zwecks Befestigung in Eingriff steht.

6. Kunststoffgehäuse nach Anspruch 5, dadurch gekennzeichnet, daß die Überwurfmutter (6) ein konisches Gewinde aufweist.

7. Kunststoffgehäuse nach mindestens einem der vorhergehenden Ansprüche, dadurch gekennzeichnet, daß der Einlaßteil (3) und der Auslaßteil (2) an ihrer Stirnseite jeweils eine ringförmige Nut (10, 11) zur Aufnahme eines elastischen Dichtelements aufweisen, die den jeweiligen Dichtbereich definiert.

8. Kunststoffgehäuse nach einem der vorhergehenden Ansprüche, dadurch gekennzeichnet, daß die Nut (10, 11) von dem Innenraum des Gehäusekopfes (1) durch einen schmalen Steg (15) getrennt sind.

9. Kunststoffgehäuse nach einem der vorhergehenden Ansprüche, dadurch gekennzeichnet, daß der Gehäusekopf (1) im Bereich seines Einlaßteils (3) und seines Auslaßteils (2) jeweils eine weitere Öffnung (18 bzw. 19) aufweist.

10. Kunststoffgehäuse nach einem der vorhergehenden Ansprüche, dadurch gekennzeichnet, daß das Gehäuseteil (5) an seiner tiefstgelegenen Stelle (17) eine weitere Öffnung (20) aufweist, die durch ein Abschlußelement (29) verschlossen ist.

11. Kunststoffgehäuse nach einem der vorhergehenden Ansprüche, dadurch gekennzeichnet, daß das Gehäuseteil (5) die Form einer Glocke hat.

12. Kunststoffgehäuse nach einem der vorhergehenden Ansprüche, dadurch gekennzeichnet, daß die Überwurfmutter (6) aus einem glasfaserverstärkten Material besteht.

13. Kunststoffgehäuse nach einem der vorhergehenden Ansprüche, dadurch gekennzeichnet, daß der Gehäusekopf (1), das Gehäuseteil (5) und das Verbindungselement (6) ganz aus Kunststoff bestehen.

14. Kunststoffgehäuse nach einem der vorhergehenden Ansprüche, dadurch gekennzeichnet, daß der Gehäusekopf (1) derart ausgebildet und mit dem Gehäuseteil (5) verbunden ist, daß eine Strömungsverbindung für Fluidströmung von dem Einlaßteil (3) zu dem Auslaßteil (2) nur durch das Gehäuseteil besteht.

15. Kunststoffgehäuse nach einem der vorhergehenden Ansprüche, dadurch gekennzeichnet, daß der Gehäusekopf (1) einen Anschluß (26) aufweist, der in das Innere des Gehäuseteils (5) weist und mit dem Auslaßteil (2) durch einen im Gehäusekopf (1) verlaufenden Strömungskanal verbunden ist.

16. Kunststoffgehäuse nach einem der Ansprüche 14 oder 15, dadurch gekennzeichnet, daß das Innere des Kunststoffgehäuses derart ausgebildet und durch ein Filterelement (22) in zwei Innenraumabschnitte, nämlich einen Reinraumabschnitt und einen Zuflußraumabschnitt, unterteilt ist, daß Fluid von dem eine Zufuhr des Fluids zu dem Zuflußabschnitt ermöglichenden Einlaßteil (3) nur durch das Filterelement zu dem Reinraumabschnitt und dem eine Abfuhr des Fluids aus dem Reinraumabschnitt ermöglichenden Auslaßteil (2) fließen kann.

17. Kunststoffgehäuse nach Anspruch 16, dadurch gekennzeichnet, daß das Filterelement im wesentlichen als einseitig geschlossener Zylinder (22) ausgebildet ist, der in dem Gehäuseteil im wesentlichen konzentrisch zu diesem angeordnet ist, daß der Gehäusekopf (1) einen Stutzen (26) zum Anbringen des Filterelements (22) mit seinem offenen Ende aufweist, und daß in dem Gehäusekopf (1) eine erste Fluidflußverbindung zwischen dem Einlaßteil (3) und dem Ringraum zwischen dem Filterelement (22) und dem Inneren des Gehäuseteils (5) und eine zweite Fluidflußverbindung zwischen dem Auslaßteil (2) und dem Inneren des Stutzens (26) vorgesehen sind.